# EUROPÄISCHE PATENTSCHRIFT

(11) **EP 1 394 199 B1**
(45) Veröffentlichungstag und Bekanntmachung des Hinweises auf die Patenterteilung: **16.05.2007**
(21) Anmeldenummer: 03015135.1
(22) Anmeldetag: 04.07.2003
(51) Int. Cl.: C08K 5/54, C08G 77/18, C07F 7/08, C07F 7/21

(54) **Alkoxysiloxanhaltiges Mittel als Wasserfänger, Trockenmittel oder Vorvernetzungsverhinderer für vernetzbare Polymermassen**
Alkoxysiloxane containing compounds for use as water scavengers, drying agents or precuring retarders for a crosslinkable polymer compositions
Alcoxysiloxanes et leur emploi comme agent deshydratant ou retardateur de prépolymérisation pour compositions de polymères réticulables

(30) Priorität: 30.08.2002 DE 10240756
(43) Veröffentlichungstag der Anmeldung: 03.03.2004
(73) Patentinhaber: Degussa GmbH, 40474 Düsseldorf (DE)
(72) Erfinder: Barfurth, Dieter, 79618 Rheinfelden (DE); Mack, Helmut, Dr., 79618 Rheinfelden (DE)

(56) Entgegenhaltungen:
- EP-A- 0 245 938
- EP-A- 0 518 057
- WO-A-90/07542
- DE-A- 19 624 032

## Beschreibung

Die vorliegende Erfindung betrifft ein neues Mittel, das als Wasserfänger, Trockenmittel und Vorvernetzungsverhinderer ("precuring retarder") in vernetzbaren Polymermassen eingesetzt werden kann.

Es ist bekannt, monomere Alkyltrialkoxysilane als so genannte "precuring retarder" in Ethylenvinyltrimethoxysilan-Copolymeren einzusetzen (WO 90/07542, EP 0 007 765 B1).

In Kleb-und Dichtstoffen sowie Farben und Lacken auf Basis silanterminierter Polyurethane, MS-Polymer oder EPION^{®} wird Vinyltrimethoxysilan (VTMO) als Wasserfänger verwendet. Der Silanzusatz garantiert die Lagerstabilität. VTMO verhindert zudem die Hautbildung während der Kleb- und Dichtstoffherstellung. Der Zusatz des Wasserfängers, Trockenmittels bzw. "precuring retarders" erfolgt üblicherweise während der Co- oder Terpolymerherstellung, im Verlauf der Compoundierung oder im Verlauf der Formulierung. Solche Zubereitungen sind in der Regel vernetzbar und werden nachfolgend auch kurz als vernetzbare Polymermassen bezeichnet.

Dabei ist von Nachteil, dass aufgrund der Flüchtigkeit besagter Silane eine größere Menge der Silankomponente einzusetzen ist, als für Trocknungszwecke, zur Wasseraufnahme bzw. als "precuring retarder" eigentlich erforderlich wäre.

Der vorliegenden Erfindung lag daher die Aufgabe zugrunde, eine Möglichkeit bereitzustellen, um den Verlust an Wasserfänger, Trockenmittel bzw. "precuring retarder" in einer vernetzbaren Polymermasse zu mindern.

Die gestellte Aufgabe wird erfindungsgemäß entsprechenden den Angaben der Patentansprüche gelöst.

Überraschenderweise wurde gefunden, dass man Alkoxysiloxane in vorteilhafter Weise als Wasserfänger, Trockenmittel bzw. "precuring retarder" in vernetzbaren Polymermassen einsetzen kann und dabei kein Verlust an Wasserfänger, Trockenmittel bzw. "precuring retarder" über die Gasphase auftritt.

So wurde gefunden, dass als Alkoxysiloxan-haltiges Mittel insbesondere Gemische kettenförmiger und cyclischer Alkoxysiloxane als Wasserfänger, Trockenmittel bzw. "precuring retarder" eingesetzt werden können.

Bevorzugte Alkoxysiloxane, insbesondere Gemische kettenförmiger und cyclischer Organoalkoxysiloxane, sind in der Regel niedrigviskos, wenig flüchtig und sehr viel reaktiver mit Wasser als die nach dem Stand der Technik in Polymermassen eingesetzten monomeren Silane.

Gegenstand der vorliegenden Erfindung ist somit die Verwendung eines Mittels als Wasserfänger, Trockenmittel oder "precuring retarder" in vernetzbaren Polymermassen, das Alkoxysiloxane enthält.

Besonders geeignete Alkoxysiloxane sowie deren Herstellung sind aus EP 0 518 057 A1, EP 0 814 110 A1 und den deutschen Patentanmeldungen 100 56 344, 100 56 343 sowie der deutschen Parallelanmeldung mit dem Titel "Gemisch kettenförmiger und cyclischer Siloxanoligomerer, dessen Herstellung und dessen Verwendung" zu entnehmen. Somit ist der Inhalt der zuvor genannten Schriften auch als Offenbarung der vorliegenden Anmeldung zu sehen.

Besagte Siloxane können bei Hydrolyse mit Wasser unter Abspaltung des entsprechenden Alkohols auch Hydroxygruppen enthalten.

Insbesondere kann ein erfindungsgemäßes Mittel kettenförmige Siloxane der allgemeinen Formel l

R₃Si-O-[SiR₂-O-]ₘSiR₃ (I)

und cyclischer Siloxane der allgemeinen Formel II 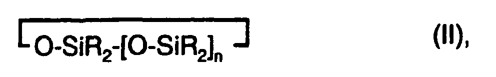 worin m eine ganze Zahl von 0 bis 40 und n eine ganze Zahl von 2 bis 40 ist, Gruppen R gleich oder verschieden sind, R für eine Kohlenwasserstoff-funktionelle Gruppe aus der Reihe Vinyl, Allyl, Phenyl, n-, iso- sowie cyclo-Alkyl mit 1 bis 18 C-Atomen, vorzugsweise Vinyl-, n-Propyl, iso-Propyl, n-Butyl, iso-Butyl, n-Octyl, isoOctyl, Hexadecyl, oder für eine Alkoxygruppe, vorzugsweise Methoxy, Ethoxy, steht und pro Siliciumatom höchstens eine Kohlenwasserstoff-funktionelle Gruppe vorliegt, enthalten.

In erfindungsgemäßen Mitteln werden n-Propylalkoxysiloxane sowie Vinylalkoxysiloxane besonders bevorzugt.

Beispielsweise können besagte Alkoxysiloxane durch gezielte Kondensation von Vinyltrimethoxysilan oder Vinyltriethoxysilan oder Propyltrimethoxysilan oder Propyltriethoxysilan oder entsprechender Organochlorsilane in Gegenwart eines Alkohols oder durch gezielte Cokondensation von Vinyltriethoxysilan und Tetraethoxysilan, von Vinyltrimethoxysilan und Tetramethoxysilan - um nur einige Beispiele zu nennen - hergestellt werden. Gegebenenfalls kann bei der Herstellung besagter Alkoxysiloxane ein Hydrolyse- bzw. Kondensationskatalysator eingesetzt sein. Auch kann man das vorliegende Mittel durch gezieltes Abmischen besagter Alkoxysiloxangemische herstellen.

Als einen weiteren Bestandteil können erfindungsgemäße Mittel monomere Alkoxysilane, beispielsweise Isobutyltriethoxysilan oder Hexadecyltrimethoxysilan enthalten.

Die Verwendung eines Alkoxysiloxane enthaltendes Mittels in vernetzbaren Polymermassen ist von Vorteil, da die erfindungsgemäß verwendeten Alkoxysiloxane eine deutlich geringere Flüchtigkeit aufweisen als beispielsweise monomeres Vinyltrimethoxysilan und darüber hinaus eine geringere Einsatzstoffmenge bei zumindest vergleichbarer Wirkung erforderlich wird. Die Wirkung ist in der Regel derart, Wasser und Feuchtigkeit unter Abspaltung eines Alkohols zu binden.

Durch die erfindungsgemäße Maßnahme können auch die Lagerstabilität und damit die Verarbeitungseigenschaften von vernetzbaren Polymermassen in vorteilhafter Weise, da einfach und kostengünstig, über einen längeren Zeit gewährleistet werden.

Auch ist die erfindungsgemäße Maßnahme umweltfreundlich, da die Emission an flüchtigen organischen Verbindungen (VOC) gemindert werden kann.

Gegenstand der vorliegenden Erfindung ist ebenfalls die Verwendung eines erfindungsgemäßen Alkoxysiloxane enthaltenden Mittels als Wasserfänger, Trockenmittel bzw. "precuring retarder", insbesondere in vernetzbaren Polymermassen.

Somit sind weiterhin Gegenstand der vorliegenden Erfindung vernetzbare Polymermassen, die als Wasserfänger, Trockenmittel oder "precuring retarder" Alkoxysiloxane enthalten, d. h. Polymermassen, denen ein erfindungsgemäßes Mittel als Wasserfänger, Trocknungsmittel oder "precuring retarder" zugesetzt wird.

Erfindungsgemäße Polymermassen, die demgemäß als Wasserfänger, Trockenmittel bzw. "precuring retarder" Alkoxysiloxane enthalten, beruhen bevorzugt auf der Basis von
- Ethylenvinyltrimethoxy- bzw. Ethylenvinyltriethoxysilan-Copolymeren, beispielsweise VISICO^{®} oder SI-LINK^{®}, welche durch radikalische Copolymerisation von Ethylen und Vinylsilanen zugänglich sind und die Silaneinheiten im Polymer statistisch verteilt sind,
oder
- Ethylenalkylen-Copolymere, insbesondere solche mit 3 bis 8 C-Atomen pro Alkeneinheit, beispielsweise ENGAGE^{®}, auf die Vinyltrimethoxysilan oder Vinyltriethoxysilan aufgepfropft wurde (SIOPLAS^{®}-Verfahren),
oder
- Vinyltrimethoxy- bzw. Vinyltriethoxysilan-Terpolymeren, beispielsweise ausgehend von Ethylen und n-Octen im Rahmen einer Metallocenkatalyse,
oder
- Pfropfpolymere aus Ethylen und Acryloxy-/Methacryioxysilan nach dem SIOPLAS^{®} -Verfahren, z. B. mit Acryloxypropyltrimethoxysilan, Acryloxypropyltriethoxysilan, Methacryloxypropyltrimethoxysilan, Methacryloxypropyltriethoxysilan,
oder
- silanterminierten Polyurethanen mit (R'O)₃Si- oder (R'O)₂SiMe-Endgruppen und Polyol-/Isocyanatgrundgerüst, wobei Me für eine Methylgruppe und R' beispielsweise für eine lineare, verzweigte oder cyclische Alkylgruppe mit 1 bis 16 C-Atomen stehen,
oder
- MS-POLYMER^{®}, einem silanterminierten Polyether auf der Basis Polypropylen- bzw. Polybutylenoxid und (R'O)₃Si- bzw. (R'O)₂SiMe-Endgruppen, wobei Me und R' die zuvor genannte Bedeutung besitzen,
oder
- EPION^{®}, einem Polyether auf der Basis Polybutylenoxid und (R'O)₃Si- oder (R'O)₂SiMe-Endgruppen, wobei Me und R' die zuvor genannte Bedeutung besitzen,
oder
- vernetzbaren HFFR(high filled flame retardent)-Compounds, d. h. gefüllte flammhemmende Polymere, wie EVA, Polyethylen oder Ethylenalkylen-Copolymere, die mit einem Silan, beispielsweise Vinyltrimethoxysilan oder Vinyltriethoxysilan oder 3-Methacryloxypropyltrimethoxysilan oder einem entsprechenden Acrylsilan, gepfropft und mit Füllstoff, beispielsweise Aluminiumhydroxid (ATH) oder Magnesiumhydroxid (MDH), und/oder mit einem intumeszierenden Füllstoffe, beispielsweise Ammoniumpolyphosphate, Zinkhydroxystannate, Melaminphosphate, Melamincyanurate - um nur einige zu nennen - gefüllt sind.

Im Allgemeinen kann man eine erfindungsgemäße Polymermasse derart herstellen, wenn man zunächst das vernetzbare Polymer vorlegt, mit Füllstoff vermischt und das erfindungsgemäße Mittel während der Formulierung/Compoundierung in einer Menge oder portionsweise an verschiedenen Punkten der Formulierung/Compoundierung, geeigneterweise unter Feuchtigkeitsausschluss bzw. getrocknetem Schutzgas, zugibt und die Polymermasse durch die Zugabe von Vernetzer, Haftvermittler und Katalysator fertig stellt und abfüllt. So kann man in vorteilhafter Weise ein anwendungsfertiges Produkt mit ausgezeichneten Lager und Anwendungseigenschaften erhalten.

Erfindungsgemäße Polymermassen werden bei Applikation üblicherweise in Gegenwart eines Vernetzungskatalysators, vorzugsweise auf Zinnbasis, beispielsweise Bis-(n-butyl)zinndiketonat (DBTAA, METATIN^{®} 740), und unter Zusatz von Wasser-/Feuchtigkeitszutritt vernetzt.

Die vorliegende Erfindung wird durch die nachfolgenden Beispiele näher erläutert.

### Beispiele

### Beispiel 1

### Vergleich der Flüchtigkeit der Trockenmittel

In Tabelle 1 ist die Flüchtigkeit einiger Trocknungsmittel gegenübergestellt. Gemessen wurde der Gewichtsverlust bei der Lagerung der Trockenmittel bei 23 °C und 60 % relativer Feuchte und einer Kontaktfläche mit der Atmosphäre von ca. 300 cm². Angegeben wurde die nach Lagerung verbleibende Masse in % der Ausgangsmasse.

Die Tabelle 1 beschreibt die wesentlich geringere Flüchtigkeit der erfindungsgemäß einzusetzenden Vinylalkoxysiloxane gegenüber dem Standard Vinyltrimethoxysilan.

**Tabelle 1**

| Lagerungsdauer (h) | Vinyltrimethoxysilan¹⁾ (%) | Vinylmethoxysiloxane²⁾ (%) | Vinylethoxysiloxane³⁾ (%) | | |
|---|---|---|---|---|---|
| 0 | 100 | 100 | 100 | | |
| 1 | 0,5 | 98,5 | 99,5 | | |
| 2 | 0,3 | 97,0 | 98,8 | | |
| 4 | 0,2 | 96,0 | 97,2 | | |
| 8 | 0,1 | 94,0 | 96,6 | | |
| 24 | 0,05 | 87,5 | 91,5 | | |
| 48 | <0,01 | 86,9 | 90,9 | | |

| | | | | | |
|---|---|---|---|---|---|
| 1) Standardtrockenmittel als Vergleichsbeispiel 2) Alkoxysiloxangemisch gemäß EP 0 518 057 A1 (Beispiel 6) 3) Dieses Trockenmittel kann wie folgt hergestellt werden: In einen 2000-ml-Doppelmantel-Dreihalskolben, versehen mit Wasserkühler, Rührer, Thermometer und Tropftrichter werden unter Stickstoffatmosphäre 807,5 g (5,0 Mol) Vinyltrichlorsilan eingefüllt. Über den Tropftrichter, dessen Zuleitungsrohr unter der Flüssigkeitsoberfläche des Chlorsilans endet, werden zunächst 575,0 g Ethanol (12,5 Mol, entspricht 60 % der zuzusetzenden Menge) bei Raumtemperatur innerhalb von 2 bis 3 Stunden zudosiert. Die Reaktionsmischung entwickelt sofort Chlorwasserstoff, der über den Kühler abgeleitet und in einem Auffanggefäß in Wasser absorbiert wird. Die Temperatur der Reaktionsmischung steigt auf ca. 35 bis 40 °C. In der nächsten Stufe wird ein Ethanol/Wasser-Gemisch, bestehend aus 391,0 g Ethanol (8,5 Mol, 40 % der zuzusetzenden Menge) und 72,0 g Wasser (4,0 Mol) so zudosiert, dass die Temperatur der Reaktionsmischung innerhalb von 3 bis 4 Stunden ca. 90 bis 95 °C erreicht. Nach beendeter Zugabe von Ethanol/Wasser-Gemisch wird 60 Minuten zum Rückfluss erhitzt. Der Reaktionsverlauf wird durch die Bestimmung des Vinyltrichlorsilan-Gehalts mittels GC verfolgt Aus dem nach der vorstehenden Arbeitsweise erhaltenen Rohprodukt, das überschüssiges Ethanol und Reste entstandenen Chlorwasserstoffs enthält, wird anschließend durch Destillation bei Normaldruck ein Ethanol/Chlorwasserstoff-Gemisch abgetrennt. Die Ansatztemperatur steigt dabei auf rd. 150 bis 155 °C. Nach der Abkühlung der Reaktionsmischung auf ca. 100 °C wird die Acidität des Produkts bzw. der Chlorid-Gehalt bestimmt. Bezogen auf den erhaltenen Chlorid-Wert wird eine stöchiometrische Menge Natriumethanolat (als 30%ige ethanolische Lösung) zugegeben und 15 Minuten gerührt. Danach wird erneut der Chlorid-Gehalt bestimmt und gegebenenfalls nochmals ethanolisches Natriumethanolat zugesetzt und erneut 15 Minuten gerührt. Ist der Chlorid-Gehalt kleiner als 10 mg/kg, wird das Produkt auf Raumtemperatur abgekühlt und der restliche Ethanolgehalt durch Vakuumdestillation entfernt (bis 30 hPa und 100 °C Produkttemperatur). Als letzter Arbeitsschritt wird das bei der Neutralisation mit Natriumethanolat entstandene Natriumchlorid über ein Filter aus dem Produkt entfernt. Erhalten werden 619,3 g (94,7 % d. Th.) vinyl- und ethoxygruppenhaltiges Oligosiloxan mit folgenden Kennzahlen: SiO₂-Gehalt 45,2 % (Masse), Ethanol: <0,1 % (Masse), Farbzahl: <5 mg Pt-Co/l. | | | | | |

### Beispiele 2 und 3

Allgemeine Methode zur Herstellung und Prüfung der vernetzbaren Polymermassen

Die vernetzbaren Polymermassen wurden mit einem Planetenmischer hergestellt, bei dem der Ansatz in 1-Liter-Dosen erfolgte. Zunächst wurde der Weichmacher mit einem Drittel des Trockenmittels (Wasserfänger bzw. Vorvernetzungsverhinderer) und einer der Weichmachermenge entsprechenden Menge des Füllstoffs (vorgetrocknet in einem Umluftwärmeschrank bei 110°C) unter intensivem Rühren vermischt. Anschließend erfolgte die Zugabe des Polymer-Bindemittels (Zusammensetzung etc. siehe folgende Beispiele), dazu kam ein weiteres Drittel Trockenmittel. Der Rest des Füllstoffs wurde dann portionsweise hinzugefügt und die Masse homogenisiert, während sie auf 80 °C erwärmt wurde. Zur Entfernung flüchtiger Bestandteile wurde dann unter Vakuum (< 5 hPa) weitergearbeitet. Nach der Abkühlung der Masse auf ca. 50°C wurde das letzte Drittel Trockenmittel zugegeben und der Silanhaftvermittler sowie der Vernetzungskatalysator eingearbeitet. Eine weitere Vakuumbehandlung schloss sich an, um Blasen zu entfernen. Die so erhaltene vernetzbare Polymermasse wurde aus der Ansatzdose in Kartuschen (Standardbehälter für Dichtmasse, 300 ml Inhalt) abgefüllt.

Die Verarbeitbarkeit und Lagerstabilität der vernetzbaren Polymermassen wurden mit der nachstehenden Methode geprüft:
Nach vorgegebenen Zeiträumen, z. B. nach 1 Tag, 1 - 2 - 3 Wochen, 1 - 2 - 3 - 6 Monaten, wurde aus einer Kartusche während 15 Sekunden die Polymermasse ausgepresst. Der Pressdruck war jeweils gleich, anschließend wurde die ausgepresste Masse gewogen. Ergänzend zu der Lagerung bei Raumtemperatur wurden die Kartuschen auch bei 50 °C gelagert und der Auspressversuch nach 1 bis 8 Wochen Lagerung durchgeführt.

### Beispiel 2

### Vernetzbare Polymermasse auf Basis silanterminiertem Polyether (MS-Polyme^{®})

Nach der oben beschriebenen allgemeinen Methode wurden

| | |
|---|---|
| 1 000 g | MS-Polymer^{®} (Mischung aus S203H und S303H, KANEKA) |
| 2 500 g | Carbital^{®} 110S (gemahlenes und stearinsäuregecoatetes Calciumcarbonat; IMERYS) |
| 700 g | Weichmacher (Diisodecylphthalat DIDP) |
| 200 g | Rheologiemodifizierer (CRAYVALLAC^{®} SL) |
| 10 g | Vernetzungskatalysator (METATIN^{®} 740) |
| 30 g | Trockenmittel (siehe Tabelle 2) |
| 20 g | Silanhaftvermittler (DYNASYLAN^{®} DAMO-T) |

zu einer vernetzbaren Polymermasse verarbeitet und in Kartuschen abgefüllt.

Die Ergebnisse der Prüfung auf Verarbeitbarkeit und Lagerstabilität sind in der Tabelle 2 angegeben:

**Tabelle 2**

| Lagerungsdauer | Lagertemperatur (°C) | Auspressmenge (g/15-sec), Trockenmittel | |
|---|---|---|---|
| | | Vinyltrimethoxysilan¹⁾ | Vinylmethoxysiloxan²⁾ |
| 1 Woche | 23 | 62 | 59 |
| 1 Monat | 23 | 61 | 57 |
| 2 Monate | 23 | 38 | 44 |
| 6 Monate | 23 | 27 | 35 |
| | | | |
| 1 Woche | 50 | 54 | 55 |
| 2 Wochen | 50 | 35 | 43 |
| 8 Wochen | 50 | 26 | 32 |

| | | | |
|---|---|---|---|
| ¹⁾ und ²⁾ vgl. Fußnote Tabelle 1 | | | |

### Beispiele 3

### Vernetzbare Polymermasse auf Basis silanterminiertem Polyurethan

Nach der oben beschriebenen allgemeinen Methode wurden

| | |
|---|---|
| 1 000 g | silanterminiertes Polyurethan (XP-55, Hansechemie) |
| 1 300 g | SOCAL^{®} 312 (gefälltes und stearinsäuregecoatetes Calciumcarbonat) |
| 400 g | Weichmacher (Diisodecylphthalat DIDP) |
| 30 g | Rheologiemodifizierer (AEROSIL^{®} R974) |
| 0,5 g | Vernetzungskatalysator (METATIN^{®} 740) |
| 40 g | Trockenmittel (siehe Tabelle 3) |
| 30 g | Silanhaftvermittler (DYNASYLAN^{®} DAMO-T) |

zu einer vernetzbaren Polymermasse verarbeitet und in Kartuschen abgefüllt.

Die Ergebnisse der Prüfung auf Verarbeitbarkeit und Lagerstabilität sind in der Tabelle 3 angegeben:

**Tabelle 3**

| Lagerungsdauer | Lagertemperatur (°C) | Auspressmenge (g/15-sec), Trockenmittel | |
|---|---|---|---|
| | | Vinyltrimethoxysilan¹⁾ | Vinylmethoxysiloxan²⁾ |
| 1 Woche | 23 | 60 | 62 |
| 1 Monat | 23 | 57 | 57 |
| 2 Monate | 23 | 35 | 42 |
| 6 Monate | 23 | 28 | 35 |
| | | | |
| 1 Woche | 50 | 55 | 54 |
| 2 Wochen | 50 | 37 | 40 |
| 8 Wochen | 50 | 26 | 33 |

| | | | |
|---|---|---|---|
| ¹⁾ und ²⁾ vgl. Fußnote Tabelle 1 | | | |

### Beispiel 4

### Vernetzbare Polymermasse auf Basis Ethylen-Vinyltrimethoxysilan-Copolymer

Aus einem handelsüblichen silanvernetzendem Polyethylen-Copolymer und 1 Gew.-% von dem in der Tabelle 4 angegebenen Trockenmittel wurde durch Extrusion eine modifizierte Polymermasse hergestellt, die folgendem Test unterzogen wurde:

Die modifizierte Polymermasse wurde bei 60 °C in offenen Gefäßen gelagert und der Verlust an Si-haltigem Trockenmittel durch Bestimmung des Si-Gehalts nach vorgegebenen Zeiten ermittelt, vgl. Tabelle 4.

**Tabelle 4**

| Lagerungsdauer (h) | Relativer Siliciumgehalt nach Lagerung in % der Ausgangsmenge an Si-haltigen Trockenmittel | | |
|---|---|---|---|
| | Vinyltrimethoxysilan¹⁾ | Octylethoxysiloxane⁴⁾ | Vinylsilanoligomer³⁾ |
| 5 | 55 | 98 | >99 |
| 10 | 25 | 95 | 97 |
| 15 | 14 | 93 | 95 |
| 20 | 9 | 89 | 93 |
| 30 | 4 | 86 | 90 |
| 40 | 2 | 82 | 88 |
| 50 | <1 | 79 | 86 |

| | | | |
|---|---|---|---|
| 4) Trockenmittel nach EP 0 814110 A1 (Beispiel) ^{1) und 3)} Trockenmittel, vgl. Fußnote Tabelle 1. | | | |

## Patentansprüche

1. Verwendung eines Alkoxysiloxane enthaltenden Mittels als Wasserfänger, Trockenmittel oder Vorvernetzungsverhinderer ("precuring retarder") in vernetzbaren Polymermassen, wobei das Mittel kettenförmige Alkoxysiloxane der allgemeinen Formel I
R₃Si-O-[SiR₂-O-]ₘSiR₃ (I)
und cyclischer Siloxane der allgemeinen Formel II 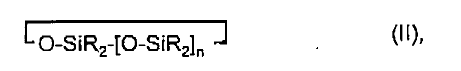 worin m eine ganze Zahl von 0 bis 40 und n eine ganze Zahl von 2 bis 40 ist, Gruppen R gleich oder verschieden sind, R für eine Kohlenwasserstoff-funktionelle Gruppe aus der Reihe Vinyl, Allyl, Phenyl, n-, iso- sowie cyclo-Alkyl mit 1 bis 18 C-Atomen oder für eine Alkoxygruppe steht und pro Siliciumatom höchstens eine Kohlenwasserstoff-funktionelle Gruppe vorliegt,
enthält.

2. Verwendung nach Anspruch 1, wobei das Mittel durch einen Gehalt an monomeren Alkoxysilanen **gekennzeichnet** ist.

## Claims

1. Use of a composition comprising alkoxysiloxanes as a water scavenger, dryer or premature-crosslinking preventative ("precuring retarder") in crosslinkable polymer compounds, wherein the composition comprises catenate alkoxysiloxanes of the general formula I
R₃Si-O-[SiR₂-O-]ₘSiR₃ (I)
and cyclic siloxanes of the general formula II 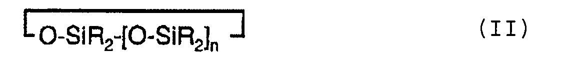 in which m is an integer from 0 to 40 and n is an integer from 2 to 40, groups R are identical or different, R is a hydrocarbon-functional group selected from vinyl, allyl, phenyl, n-, iso-, and cyclo-alkyl having from 1 to 18 carbon atoms or is an alkoxy group, and there is not more than one hydrocarbon-functional group per silicon atom.

2. Use according to Claim 1, the composition being **characterized in that** it comprises monomeric alkoxysilanes.

## Revendications

1. Utilisation d'un produit contenant des alcoxysiloxanes comme agent déshydratant, desséchant ou retardateur de préréticulation ("precuring retarder") dans des masses réticulables de polymère, le produit contenant des alcoxysiloxanes en forme de chaîne de la formule générale I :
R₃Si-O-[SiR₂-O-]ₘSiR₃ (I)
et des siloxanes cycliques de formule générale II : 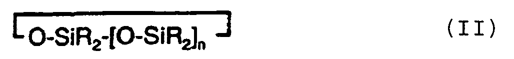 où m est un nombre entier de 0 à 40 et n un nombre entier de 2 à 40, les groupes R sont identiques ou différents, R représentant un groupe fonctionnel d'hydrocarbure de la série vinyle, allyle, phényle, n-alkyle, isoalkyle ainsi que cycloalkyle comportant 1 à 18 atomes de C ou un groupe alcoxy, et il y a au maximum un groupe fonctionnel d'hydrocarbure par atome de silicium.

2. Utilisation suivant la revendication 1, le produit étant **caractérisé par** une teneur en alcoxysilanes monomères.
